# EUROPEAN PATENT APPLICATION

(11) **EP 1 637 309 A1**
(43) Date of publication of application: **22.03.2006**
(21) Application number: 05076994.2
(22) Date of filing: 31.08.2005
(51) Int. Cl.: B29C 45/14, F16H 57/02, F02D 9/10

(54) **Method and apparatus for overmolding a gear onto a shaft**

(30) Priority: 16.09.2004 US 942216
(71) Applicant: Delphi Technologies, Inc., Troy, MI 48007 (US)
(72) Inventor: Evans, David M., Mendon, NY 14506 (US); O'Neill, Daniel P., Fairport, NY 14450 (US); Deangelis, Gary J., Spencerport, NY 14559 (US)
(74) Representative: Denton, Michael John

(57) **Abstract**

A shaft (110) for receiving a polymer overmolding of a gear (22) from an axial single-gate mold. The shaft (110) is provided with a plurality of features for preventing rotation of the molded gear on the shaft, the features being in the form of axial-direction flats(114a, 114b, 114c, 114d, 214a, 214b, 214c), the number of such flats being greater than the prior art two (double D) and preferably four (quadral D). In a four-flat mold and shaft arrangement having a single, axial mold gate, longitudinal knit lines between the quadral D's are virtually non-existent, and polymer in these regions is substantially as strong as polymer elsewhere in the casting.

## Description

### TECHNICAL FIELD

The present invention relates to molding of plastic parts; more particularly, to overmolding of plastic parts onto substrates; and most particularly, to method and apparatus for overmolding a plastic gear onto a gear shaft.

### BACKGROUND OF THE INVENTION

It is well known to drive the rotation of a shaft by means of a gear, pulley, or lever arm (referred to herein collectively as a "gear") attached to the end of the shaft. For a simple example, the rotary valve shaft of an electronically controlled air flow valve for admitting air to an internal combustion engine typically includes a gear mounted onto the end of the shaft. For minimizing manufacturing cost and finished weight of the assembly, it is known to form the gear from a injection-moldable polymer such as nylon, and further, to overmold the gear directly onto the end of the shaft. To keep the gear locked onto the shaft and prevent it from loosening and rotating on the shaft during its working lifetime, the shaft typically is provided with features in the overmolding region, such as a pair of opposed flats, also known in the art as "double D's" in reference to the appearance of the flats in a shaft cross-sectional view.

A weakness is known to arise in such a prior art gear when overmolded onto a shaft in this fashion. Typically, the mold is provided with an axial gate for injecting liquid polymer onto the end of the shaft. The polymer flows around the end surface to fill the double D voids and then flows primarily from the double D voids circumferentially around the shaft to form the remainder of the gear hub and gear teeth. Where the opposing flows from the double D voids meet, knit lines are formed which differ in polymeric structure and strength from the rest of the injection. The inventors believe that, although there is some longitudinal flow of polymer in the regions between the double D voids, most of the material therein enters circumferentially from the double D voids, thus producing pronounced longitudinal knit lines at the interfaces between the opposed circumferential flows. Testing has shown that such knit lines may have up to 50% less tensile strength as compared to casting formed from free-flowing polymer. In use, prior art gears may crack along the knit lines, when loaded torsionally against the shaft, resulting in catastrophic failure of the shaft/gear assembly.

What is needed in the art is a method and apparatus for overmolding a polymeric gear onto a shaft without creating significant zones of structural weakness in the molded component.

It is a principal object of the present invention to provide an assembly comprising an overmolded gear on a shaft which maintains the structural integrity of the assembly over its working life.

### SUMMARY OF THE INVENTION

Briefly described, a shaft for receiving a polymer overmolding of a gear from an axial single-gate mold is provided with a plurality of features for preventing rotation of the molded gear on the shaft. The shaft features are in the form of a plurality of axial-direction flats, the number of such flats being greater than two (double D) and preferably four (referred to herein as "quadral D"). Finite element analysis shows that in a four-flat mold and shaft arrangement having a single, axial mold gate, longitudinal knit lines between the D's are virtually non-existent, and polymer in these areas is substantially as strong as polymer elsewhere in the casting.

### BRIEF DESCRIPTION OF THE DRAWINGS

The present invention will now be described, by way of example, with reference to the accompanying drawings, in which:
FIG. 1 is an isometric view of a prior art shaft having a double D shaft end portion;
FIG. 2 is an elevational view of the double D shaft end portion shown in FIG. 1;
FIG. 3 is a cross-sectional view taken through the double D shaft end portion taken along line 3-3;
FIG. 4 is a first isometric view of a prior art gear overmolded onto the double D shaft end of the shaft shown in FIGS. 1-3, showing the position of a first knit line;
FIG. 5 is a second isometric view of the prior art gear shown in FIG. 4, taken at 180° from that view and showing a second and opposite knit line;
FIG. 6 is a first isometric view of the prior art shaft and gear shown in FIGS. 4-5, showing propagation of a catastrophic crack from the knit lines shown in FIGS. 4-5;
FIG. 7 is a second isometric view of the opposite side of the gear shown in FIG. 6, showing propagation of the crack across the overmolded end of the shaft anc connecting with the second knit line;
FIG. 8 is an isometric view of a shaft in accordance with the invention having a quadral D shaft end portion;
FIG. 9 is an elevational view of the quadral D shaft end portion shown in FIG. 8;
FIG. 10 is a cross-sectional view taken through the quadral D shaft end portion taken along line 10-10; and
FIG. 11 is across-sectional view of a treble D shaft end portion in accordance with the invention.

### DESCRIPTION OF THE PREFERRED EMBODIMENTS

The benefits of a shaft and overmolded gear in accordance with the invention may be better appreciated by first considering a prior art shaft and overmolded gear.

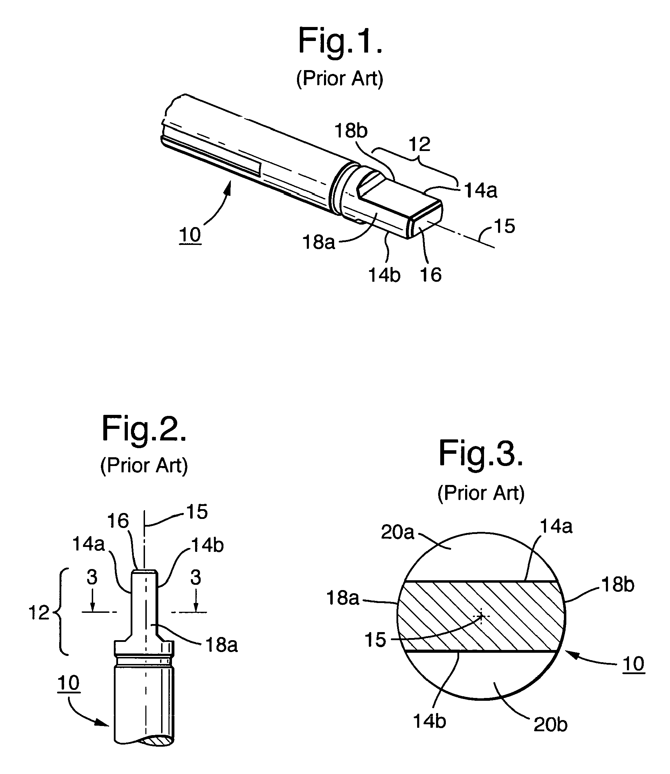

Referring to FIGS. 1 through 3, a prior art shaft 10 includes an end portion 12 formed for receiving an overmolded gear (not shown). End portion 12 is basically cylindrical and is provided with first and second opposed flats 14a,14b parallel with shaft axis 15, extending from shaft end 16, and separated by cylindrical inter-flat regions 18a,18b.

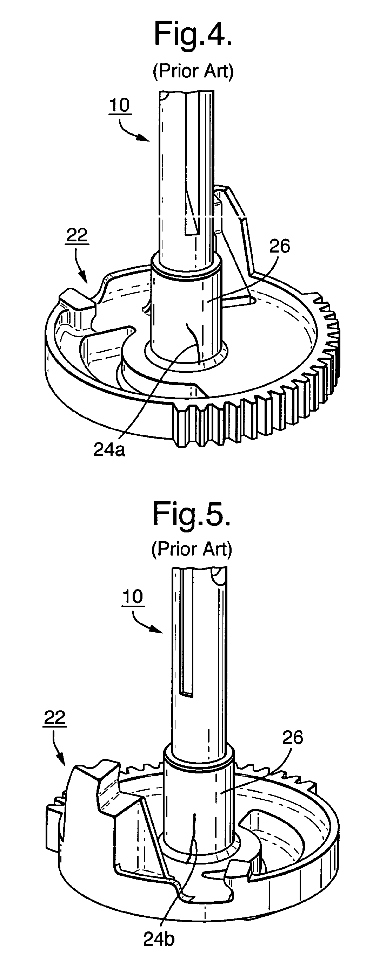

Referring to FIGS. 4 and 5, a polymer gear 22 is shown, having been formed on portion 12 of shaft 10 by conventional injection overmolding using a hub and gear shaped mold (not shown) having an axial gate on axis 15. In the overmolding operation, liquid polymer enters the mold via the axial gate, flows over and covers end 16, and axially enters two cylindrical voids 20a,20b formed by cooperation of the cylindrical hub mold and shaft flats 14a,14b. These voids are known colloquially in the art as "D"s because of their appearance in cross-section, as shown in FIG. 3. Some polymer also flows axially into inter-flat regions 18a,18b, but most of the polymer entering those regions comes circumferentially from voids 20a,20b, resulting in longitudinal knit lines 24a,24b in hub 26 wherein the advancing polymer fronts meet and partially coalesce.

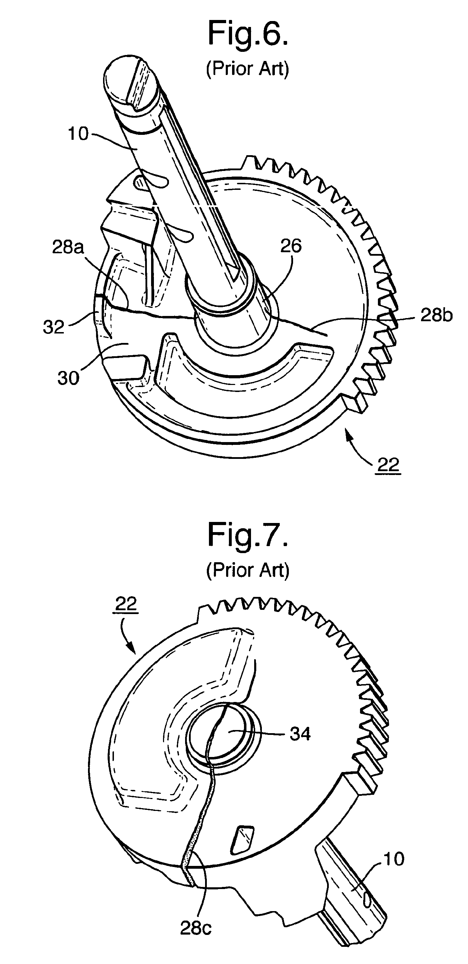

As is known in the art, knit lines 24a,24b can represent zones of weakness in the resulting casting. Referring to FIGS. 6 and 7, hub knit lines 24a,24b are shown having fractured, under stress load and time of use, into cracks 28a,28b, extending into gear flange 30 and periphery 32, and joining to form catastrophic crack 28c extending across the molded end 34 of hub 26.

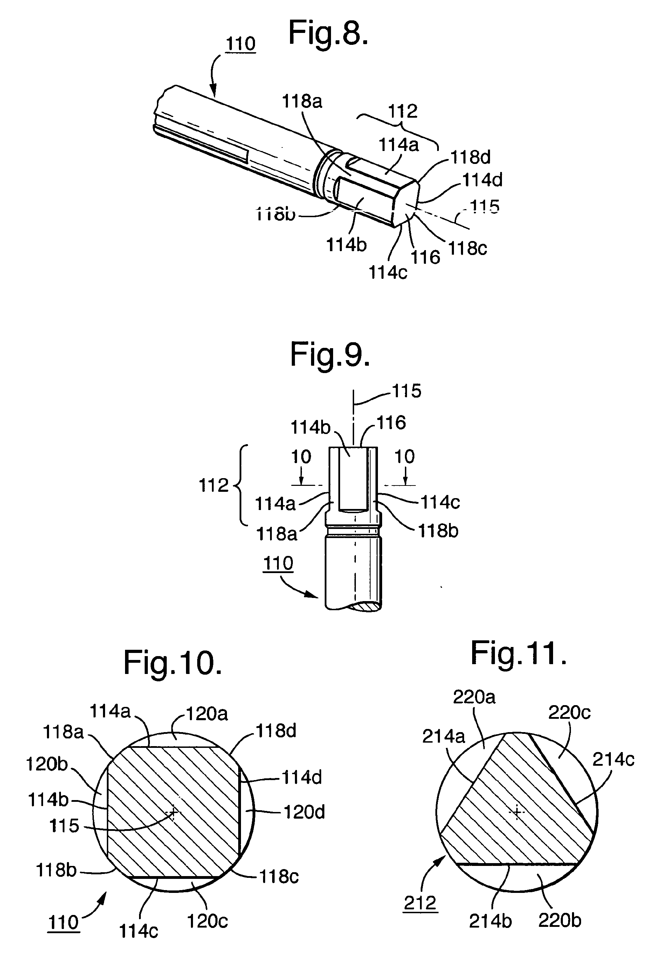

Referring to FIGS. 8 through 10, an improved shaft 110 in accordance with the invention includes an end portion 112 formed for receiving an overmolded gear (not shown). End portion 112 is basically cylindrical and is provided with first, second, third, and fourth flats 114a,114b,114c,114d parallel with shaft axis 115 preferably at 90° included angles to one another, extending from shaft end 116, and separated by cylindrical inter-flat regions 118a,118b,118c,118d. Flats 114a,114b,114c,114d in accordance with the invention need not necessarily be formed at 90° to one another, nor all of the same chordal length, although a currently preferred embodiment is as shown in FIGS. 8 through 10.

When a polymer gear (not shown but understood to be similar to gear 22) is formed on portion 112 of shaft 110 by conventional injection overmolding using a hub and gear shaped mold (not shown) having an axial gate on axis 115, liquid polymer enters the mold via the axial gate, flows over and covers end 116, and axially enters the four cylindrical (quadral D) voids 120a,120b,120c,120d formed by cooperation of the cylindrical hub mold and shaft flats 114a,114b,114c,114d. The inventors believe that major amounts of polymer also flow axially from end 116 into inter-flat regions 118a, 118b, 118c, 118d such that those regions are filled predominantly by such axial flows, thereby preventing the formation of longitudinal knit lines from circumferential flow as occurs in the prior art molding.

Although this explanation should not be relied on for patentability of the invention, from the surprising lack of longitudinal knit lines when using a quadral D shaft, it appears to the inventors that the quadral D arrangement of flats prevents the formation of knit lines by slowing down the filling of the D voids and conversely accelerating the axial filling of the inter-flat regions from end 116. Such relative filling rates, of course, are also a function of the radial dimension of the annular hub-forming space between shaft end 112 and the inner wall of the mold. By optimizing the axial fill rates of D voids and inter-flat regions to prevent circumferential filling of the inter-flat regions from the D voids, other shaft end configurations having a plurality of flats are possible, for example, a shaft end 212 having three flats 214a,214b,214c forming treble D voids 220a,220b,220c, as shown in FIG. 11.

While this invention is depicted in the figures as a gear molded onto a shaft, as mentioned previously, it is intended that the invention be applied equally to other members molded to a shaft such as, for example, levers, pulleys and the like.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A shaft (110) adapted for overmolding of a plastic gear, pulley, or lever (22) upon an end portion (112, 212) thereof, the end portion comprising features for preventing rotation of said gear on said shaft, said features including a plurality of axially-extending flats (114a, 114b, 114c, 114d, 214a, 214b, 214c) wherein the number of said flats is at least three.

2. A shaft (110) in accordance with Claim 1 wherein said flats are parallel to an axis (115) of said shaft.

3. A shaft (110) in accordance with Claim 1 wherein said flats are circumferentially separated by a plurality of inter-flat regions (118a, 118b, 118c, 118d).

4. A shaft (110) in accordance with Claim 3 wherein the number of said inter-flat regions equals the number of said flats.

5. A shaft (110) in accordance with Claim 1 wherein the number of said flats is four.

6. A shaft (110) in accordance with Claim 5 wherein said four flats are of equal chordal length and have 90° included angles between adjacent of said flats.

7. An assembly comprising:
a) a shaft (110, 22) adapted for overmolding of a plastic gear, pulley, or lever (22) upon an end portion (112, 212) thereof, said end portion having features for preventing rotation of said gear on said shaft, said features including a plurality of axially-extending flats (114a, 114b, 114c, 114d, 214a, 214b, 214c) wherein the number of said flats is at least three; and
b) a plastic member (22) overmolded upon said end portion.

8. An assembly in accordance with Claim 7 wherein said plastic member (22) is selected from a group comprising a gear, pulley and lever.

9. An assembly in accordance with Claim 7 wherein said assembly is a component of an electronic throttle control valve for an internal combustion engine.

10. An internal combustion engine, comprising an electronic throttle control valve,
wherein said valve includes a plastic gear (22) overmolded onto a shaft (110), and
wherein said shaft has features for preventing rotation of said gear on said shaft, said features including a plurality of axially-extending flats (114a, 114b, 114c, 114d, 214a, 214b, 214c) wherein the number of said flats is at least three.
